# EUROPÄISCHE PATENTSCHRIFT

(11) **EP 0 863 350 B1**
(45) Veröffentlichungstag und Bekanntmachung des Hinweises auf die Patenterteilung: **23.05.2001**
(21) Anmeldenummer: 97122307.8
(22) Anmeldetag: 17.12.1997
(51) Int. Cl.: F16L 3/23, H02G 3/30

(54) **Vorrichtung zum Halten von Rohren**
Device for supporting pipes
Dispositif de fixation de tuyaux

(30) Priorität: 07.02.1997 DE 19704674
(43) Veröffentlichungstag der Anmeldung: 09.09.1998
(73) Patentinhaber: TRW Automotive Electronics & Components GmbH & Co. KG, 78315 Radolfzell (DE)
(72) Erfinder: Kraus, Willibald, 67289 Grünstadt (DE)
(74) Vertreter: Schieschke, Klaus, Dipl.-Ing.

(56) Entgegenhaltungen:
- EP-A- 0 791 997
- "Trends in cable fastening technique" DESIGN ENGINEERING, Nr. 232, Mai 1980, Seiten 42-43, XP002064293 LONDON, (UK)

## Beschreibung

Die Erfindung bezieht sich auf eine Vorrichtung zum Haltern von Rohren, Kabeln oder rohrförmigen Gegenständen mit einem mit einem Träger zu verbindenden Haltebereich und einem darüber angeordneten, beidseitig über den Haltebereich hinausragenden Lagerbereich, nach dem Oberbegriff des Anspruchs 1.

Als Stand der Technik ist bereits eine derartige Vorrichtung bekannt (FR-PS 2 717 554), bei welcher der Lagerbereich schalenförmig ausgebildet ist. In der Mitte der Schale befinden sich zwei klippartige Elemente, in welche ein zu befestigendes Rohr eingeklippt werden kann. Alternativ besteht auch die Möglichkeit, durch selbsthaftende bandförmige Befestigungselemente mehrere Rohre zu umschlingen und diese- an dem schalenförmigen Lagerbereich zu befestigen. Nachteilig ist bei dieser bekannten Konstruktion, dass sich über einen längeren Zeitraum diese bandförmigen Befestigungselemente lösen können, so dass die Funktion der Haltesicherheit nicht mehr gewährleistet ist.

Weiterhin ist eine Vorrichtung zum Haltern von Rohren bekannt, bei welcher der Lagerbereich relativ kurz ausgebildet ist und unterseitig eine durchgehende Öffnung aufweist, durch welche ein bandförmiges Befestigungselement hindurchgreift (CA-PS 695 251). Hier werden die zu halternden Rohre nur über einen relativ geringen Lagerbereich gehaltert.

Weiterer Stand der Technik ist eine Vorrichtung, welche aus zwei über Scharniere miteinander verbundenen, halbschalenartigen Elementen besteht, welche die zu halternden Rohre umgreifen (GB 214 900 A).

Gegenüber diesem bekannten Stand der Technik besteht die Aufgabe der vorliegenden Erfindung darin, eine Vorrichtung der eingangs genannten Art zu schaffen, bei welcher auch über einen längeren Zeitraum eine einwandfreie Befestigung von Rohren oder Kabeln oder rohrförmigen Gegenständen gewährleistet ist.

Diese Aufgabe wird erfindungsgemäß dadurch gelöst, dass der Lagerbereich jeweils an seiner Stirnseite eine Wickelzone aufweist, welche aus mindestens zwei, sich in Längsrichtung des Lagerbereichs erstreckenden federnden, Armen besteht. Durch diese Wickelzone wird ein federnder Bereich geschaffen, welcher verhindert, dass sich bandförmige Befestigungselemente, die diese Wickelzone umschließen, lockern können. Die zu halternden Rohre oder Kabel werden damit einwandfrei und prozesssicher an der erfindungsgemäßen Vorrichtung befestigt.

Die Wickelzone kann jeweils aus drei, durch zwei Schlitze voneinander getrennten, federnden Armen bestehen. Hierbei können die beiden äußeren Arme außenseitig zu dem Haltebereich konisch zulaufend ausgebildet sein, so dass sich auf einfache Weise der gewünschte Spreizeffekt ergibt. Bei schmaleren Kabeln können sich die äußeren Arme übereinander legen, wodurch auch für diese Elemente eine einwandfreie Halterung erzielt wird.

Die federnden Arme - ob nun zwei oder mehrere - können unterseitig mit mindestens einer Rastnase, vorzugsweise mit mehreren, im Abstand voneinander liegenden Rastnasen ausgestattet sein. Diese Rastnasen können Sägezahnform aufweisen. Damit erfährt das bandförmige Befestigungselement beim Umschlingen der Wickelzone eine zusätzliche Sicherung, insbesondere gegen Verschieben. Es besteht auch die Möglichkeit, am Ende der Wickelzone eine Art hakenförmige Rastnase einzusetzen, um den gleichen vorgenannten Effekt zu erzielen.

In weiterer Ausgestaltung der Erfindung kann die Wickelzone jeweils in einen vergrößerten, mittleren Bereich übergehen, welcher mit dem Haltebereich verbunden ist. Dieser mittlere Bereich kann konisch zulaufend mit den beiden Wickelzonen verbunden sein, wobei der konisch zulaufende Teil des mittleren Bereichs mit seitlichen Aussparungen versehen sein kann. Hierdurch ergibt sich eine Art Brücke mit hoher Materialeinsparung, jedoch großer Festigkeit.

Weiterhin kann der mittlere Bereich oberhalb des Haltebereichs eine durchgehende, quer zur Rohrlängsrichtung verlaufende Ausnehmung aufweisen, welche beispielsweise mit mindestens einem Verriegelungselement versehen ist. Durch diese Ausnehmung lässt sich ein anderes Kabelband quer zur Rohrlängsrichtung an der erfindungsgemäßen Vorrichtung befestigen, so dass noch weitere rohrförmige Elemente über dieses zusätzliche Kabelband an der Vorrichtung befestigt werden können.

In weiterer Ausgestaltung der Erfindung können oberseitig der Wickelzonen und/oder des mittleren Bereichs eine oder mehrere Rastnocken vorgesehen sein, welche mittig oder seitlich und/oder im gleichen oder unterschiedlichen Abstand voneinander auf der Oberseite der Wickelzonen und/oder des mittleren Bereichs angeordnet sind. Diese beliebig gestalteten Rastnocken pressen sich in den Umfang des zu halternden Rohres oder der zu halternden Rohre ein und ergeben somit im Zusammenwirken mit dem die Wickelzonen umschlingenden bandförmigen Befestigungselement eine sehr gute Halterung der zu befestigenden Elemente.

Zwischen dem Haltebereich und dem mittleren Bereich kann eine umlaufende Dichtlippe angeordnet sein, welche beispielsweise stirnseitig mit einem aus einem weicheren Material bestehenden Dichtring versehen ist. Hierdurch ergibt sich eine gute Dichtwirkung gegen eine Trägeröffnung, wobei der Dichtring beispielsweise im Querschnitt mehreckig oder rund ausgebildet ist.

Der Haltebereich kann als Klipp, als Profil oder Gewindebolzen, als Teil eines Bajonett-Verschlusses oder als Schiebelager ausgebildet sein. Ist der Haltebereich als Klipp gestaltet, kann dieser im Querschnitt rund, oval oder rechteckig ausgebildet sein, je nach Form einer vorliegenden Trägeröffnung.

Der Klipp kann über den Umfang verteilt mindestens zwei federnde, gegen die Dichtlippe gerichtete Rastarme aufweisen, welche beispielsweise stirnseitig mit einer oder mehreren Abstufungen versehen sind. Diese federnden Rastarme mit ihren Abstufungen greifen hinter die betreffende Trägeröffnung und haltern damit die erfindungsgemäße Vorrichtung einwandfrei.

Vorteilhafte Weiterbildungen ergeben sich aus den weiteren Unteransprüchen.

Die Erfindung wird nachfolgend anhand von in der Zeichnung dargestellten Ausführungsbeispielen näher beschrieben. In der Zeichnung zeigen:
- Fig. 1: eine Seitenansicht der Vorrichtung zum Haltern von Rohren;
- Fig. 2: eine Draufsicht auf die Vorrichtung;
- Fig. 3: eine Vorderansicht der Vorrichtung nach Fig. 1 und 2;
- Fig. 4: eine perspektivische Ansicht der vorgenannten Vorrichtung;
- Fig. 4A: eine andere Ausführungsmöglichkeit der erfindungsgemäßen Vorrichtung im Mittelschnitt;

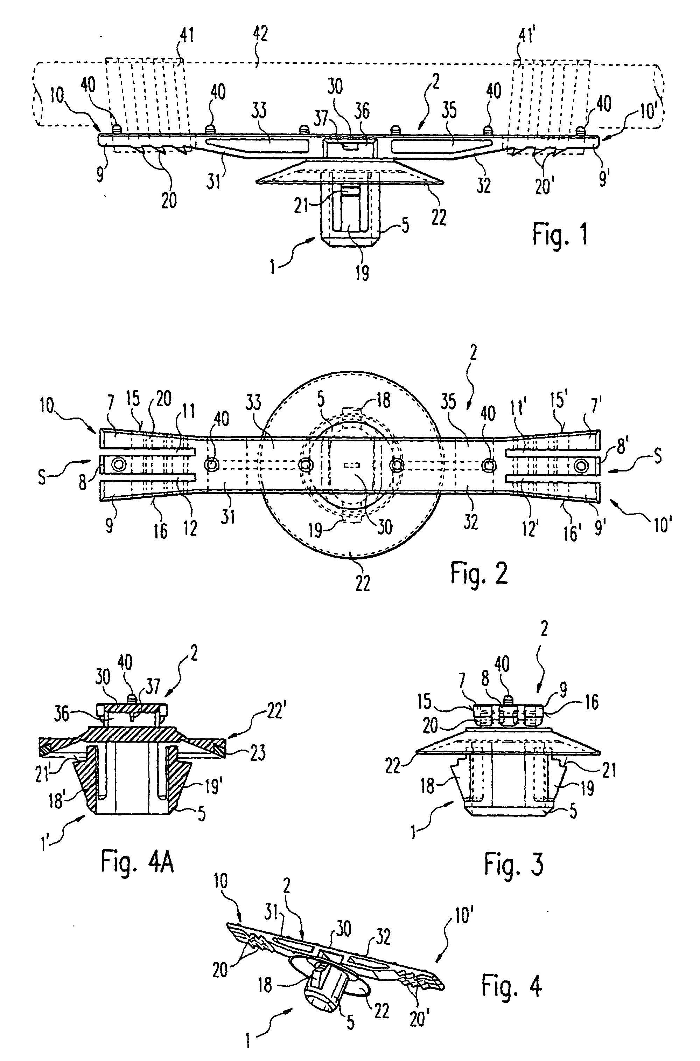

Die in den Fig. 1 bis 4 dargestellte Vorrichtung zum Haltern von Rohren besteht im Wesentlichen aus einem mit einem nicht näher dargestellten Träger zu verbindenden Haltebereich 1 und einem darüber angeordneten, beidseitig über den Haltebereich 1 hinausragenden Lagerbereich 2.

Der Lagerbereich 2 weist nach Fig. 2 jeweils an seiner Stirnseite S eine Wickelzone 10, 10' auf. Die Wickelzonen 10 und 10' sind bei dem dargestellten Ausführungsbeispiel jeweils aus drei, durch zwei Schlitze 11 und 12 bzw. 11' und 12' voneinander getrennten, federnden Armen 7, 8, 9 bzw. 7', 8', 9' gebildet.

Wie insbesondere aus Fig. 2 erkennbar, sind die beiden äußeren Arme 7 und 9 bzw. 7' und 9' außenseitig zu dem Haltebereich 1 konisch zulaufend ausgebildet, d.h. sie weisen konische Flächen 15 und 16 bzw. 15' und 16' auf. Damit ergibt sich jeweils im Endbereich, d.h. in der Wickelzone 10 und 10' eine Federwirkung auf die in Fig. 1 strichliert dargestellten bandförmigen Befestigungselemente 41 und 41', welche z.B. ein zu halterndes Rohr 42 umschlingen, so dass ein unbeabsichtigtes Lösen auch über einen größeren Zeitraum und/oder unter Wärmeeinwirkung einwandfrei vermieden wird.

Zur weiteren Sicherung der bandförmigen Befestigungselemente 41 und 41' können die federnden Arme 7, 8, 9 bzw. 7', 8', 9' unterseitig mit Rastnasen 20 und 20' versehen sein. Diese Rastnasen sind beispielsweise sägezahnförmig ausgebildet. Sie krallen sich damit in das betreffende bandförmige Befestigungselement 41 bzw. 41' und sichern dessen Lage nach dem Umschlingen eines oder mehrerer zu halternder Rohre 42.

Statt der sägezahnförmigen Rastnasen 20 und 20' besteht auch die Möglichkeit, diese anders zu gestalten oder lediglich eine Rastnase vorzusehen, welche hakenförmig ausgebildet ist und die jeweilige Stirnseite S der Arme 7, 8, 9 bzw. 7', 8', 9' begrenzt.

Um die zu halternden Rohre 42 zusätzlich zu sichern, können auf der Oberseite des Lagerbereichs 2 Rastnocken 40 vorgesehen sein, welche beispielsweise im gleichmäßigen Abstand nach Fig. 1 und 2 liegen. Diese Rastnocken können nach Fig. 2 mittig auf der Oberseite des Lagerbereichs angeordnet sein und sich bis zu dem vorderen Bereich der mittleren Arme 8 und 8' erstrekken. Die Form dieser Rastnocken 40 ist beliebig. Es muss jedoch gewährleistet sein, dass beim Umschlingen der zu halternden Rohre 42 mit den bandförmigen Befestigungselementen 41 bzw. 41' die Rastnocken 40 so den Außenumfang der zu halternden Rohre beaufschlagen, dass eine zusätzliche Verschiebesicherung gegeben ist.

Durch die Gestaltung der Wickelzonen 10 und 10' mit den drei federnden Armen 7, 8, 9 bzw. 7', 8' und 9' besteht auch die Möglichkeit, z.B. Kabel geringeren Durchmessers einwandfrei mit der erfindungsgemäßen Vorrichtung zu verbinden: In diesem Fall können sich die äußeren Arme 7 und 9 bzw. 7' und 9' zumindest teilweise über den jeweiligen mittleren Arm 8 und 8' legen, so dass auch unter Beibehaltung der Spreizwirkung mit Hilfe des jeweiligen bandförmigen Befestigungselements 41 bzw. 41' ein Rohr oder Kabel geringeren Durchmessers einwandfrei gehaltert wird.

Aus Fig. 1 geht hervor, dass die Wickelzone 10 und 10' jeweils in einen vergrößerten mittleren Bereich 30 übergeht, welcher mit dem Haltebereich 1 verbunden ist. Dieser mittlere Bereich 30 kann über konisch zulaufende Teile 31 und 32 mit den beiden Wickelzonen 10 und 10' verbunden sein. Diese konisch zulaufenden Teile können gemäß Fig. 1 und 4 mit seitlichen Aussparungen 33 und 35 versehen sein, so dass sich eine Art Brücke mit hoher Festigkeit, jedoch guter Materialeinsparung ergibt.

Insbesondere aus Fig. 1 und dem Mittelschnitt nach Fig. 4 A geht hervor, dass der mittlere Bereich 30 oberhalb des Haltebereichs 1 eine durchgehende, quer zur Rohrlängsrichtung verlaufende Ausnehmung 36 aufweist. Diese Ausnehmung 36 kann mit einem Verriegelungselement 37 versehen sein. Es besteht damit die Möglichkeit, ein nicht näher dargestelltes Kabelband durch die Ausnehmung hindurch zu führen und zum Umschlingen weiterer Rohre zu verwenden, wobei dieses Kabelband mit dem Verriegelungselement 37 verschiebesicher an der erfindungsgemäßen Vorrichtung 1 befestigt ist.

Der in den Fig. 1, 3 und 4 dargestellte Haltebereich 1 kann als Klipp, als Profil- oder Gewindebolzen, als Teil eines Bajonett-Verschlusses oder als Schiebelager ausgebildet sein. Bei dem vorliegenden Beispiel ist der Haltebereich 1 als Klipp 5 gestaltet. Dieser Klipp 5 kann im Querschnitt rund, oval oder rechteckig ausgebildet sein. Er weist über den Umfang verteilt nach Fig. 1 und 3 mindestens zwei Rastarme 18 und 19 auf, wobei der eine federnd und der andere steif ausgebildet sein kann oder zwei federnde Rastnasen vorliegen.

Oberhalb dieser Rastarme ist der Klipp 5 mit einer umlaufenden Dichtlippe 22 versehen. Diese Dichtlippe 22 kann bei dem Ausführungsbeispiel nach Fig. 1 bis 4 einstückig ausgebildet sein.

Bei dem anderen Ausführungsbeispiel nach Fig. 4 A besteht auch die Möglichkeit, dass die umlaufende Dichtlippe 22' stirnseitig mit einem aus weicheren Material bestehenden Dichtring 23 versehen ist. Dieser Dichtring 23 kann im Querschnitt mehreckig oder rund ausgebildet sein und führt zu einer zusätzlichen Dichtwirkung gegenüber einer nicht näher dargestellten Trägeröffnung.

Die zu der Dichtlippe 22 bzw. 22' gerichteten Rastarme 18 und 19 bzw. 18' und 19' können mit mehreren Abstufungen 21 nach Fig. 3 oder mit einer einzigen Abstufung 21' bei dem Ausführungsbeispiel nach Fig. 4 A versehen sein. Diese Abstufung 21 bzw. 21' legt sich an die Unterseite einer Trägeröffnung an und bewirkt somit im Zusammenwirken mit der Dichtlippe 22 bzw. 22' einen sicheren, abgedichteten Halt an einem nicht näher dargestellten Träger.

Der Dichtring 23 kann mit Hilfe des an sich bekannten Zweikomponenten-Spritzverfahrens mit der Dichtlippe 22' verbunden sein. Es besteht auch die nicht dargestellte Möglichkeit, den Dichtring 23 auf mechanische Weise mit der Dichtlippe 22' zu verbinden. In diesem Fall kann die Dichtlippe 22' Durchbrechungen aufweisen, durch welche mit Köpfen versehene Zapfen des Dichtrings 23 hindurchgreifen und diesen damit funktionssicher an der Unterseite der Dichtlippe 22' haltern. Statt der Zapfen können auch stegartige Halteelemente vorgesehen sein, welche sich nach dem Durchtritt durch die Dichtlippe 22' in Aussparungen einlagern.

Durch die besondere Gestaltung der Vorrichtung zum Haltern von Rohren mit den beiden konisch zulaufenden, geschlitzten Wikkelzonen 10 und 10' sowie den anderen Elementen ergibt sich eine sehr gute Halterung von einem oder mehreren Rohren bzw. Kabeln oder anderen rohrförmigen Gegenständen. Diese sind verschiebesicher auf der erfindungsgemäßen Vorrichtung gehaltert, wobei auch die bandförmigen Befestigungselemente 41 und 41' infolge der Spreizwirkung der Wickelzonen im Zusammenwirken mit den Rastnasen 20 und 20' und den Rastnocken 40 zur weiteren Prozesssicherheit beitragen.

Durch die vorgenannten Ausführungsformen der erfindungsgemäßen Vorrichtung ergibt sich bei einfacher Bauart eine sehr gute Halterung von einem oder mehreren Rohren bzw. Kabeln oder anderen rohrförmigen Gegenständen. Diese sind verschiebesicher gehaltert.

## Patentansprüche

1. Vorrichtung zum Haltern von Rohren, Kabeln oder rohrförmigen Gegenständen mit einem mit einem Träger zu verbindenden Haltebereich (1; 1') und einem darüber angeordneten, beidseitig über den Haltebereich (1; 1') hinausragenden Lagerbereich (2), an welchem über mindestens ein bandförmiges Befestigungselement (41; 41') mindestens ein Rohr befestigbar ist,
**dadurch gekennzeichnet,**
dass der Lagerbereich (2) jeweils an seiner Stirnseite (S) eine Wickelzone (10, 10') aufweist, welche aus mindestens zwei sich in Längsrichtung des Lagerbereichs (2) erstreckenden federnden Armen (7, 8, 9; 7', 8', 9') besteht.

2. Vorrichtung nach Anspruch 1,
**dadurch gekennzeichnet,**
dass die Wickelzone (10; 10') jeweils aus drei, durch zwei Schlitze (11, 12; 11', 12') voneinander getrennten, federnden Armen (7, 8, 9; 7', 8', 9') besteht.

3. Vorrichtung nach Anspruch 2,
**dadurch gekennzeichnet,**
dass die beiden äußeren Arme (7, 9; 7', 9') außenseitig zu dem Haltebereich (1; 1') konisch zulaufend (15, 16; 15', 16') ausgebildet sind.

4. Vorrichtung nach einem oder mehreren der vorhergehenden Ansprüche,
**dadurch gekennzeichnet,**
dass die federnden Arme (7, 8, 9; 7', 8', 9') unterseitig mit mindestens einer Rastnase (20; 20') versehen sind.

5. Vorrichtung nach Anspruch 4,
**gekennzeichnet durch**
mehrere, im Abstand voneinander liegende Rastnasen (20; 20').

6. Vorrichtung nach Anspruch 4 oder 5,
**dadurch gekennzeichnet,**
dass die Rastnasen (20; 20') Sägezahnform aufweisen.

7. Vorrichtung nach einem oder mehreren der vorhergehenden Ansprüche,
**dadurch gekennzeichnet,**
dass die Wickelzone (10; 10') jeweils in einen vergrößerten, mittleren Bereich (30) übergeht, welcher mit dem Haltebereich (1; 1') verbunden ist.

8. Vorrichtung nach Anspruch 7,
**dadurch gekennzeichnet,**
dass der mittlere Bereich (30) konisch zulaufend mit den beiden Wickelzonen (10; 10') verbunden ist.

9. Vorrichtung nach Anspruch 7 und 8,
**dadurch gekennzeichnet,**
dass der konisch zulaufende Teil (31, 32) des mittleren Bereichs (30) mit seitlichen Aussparungen (33, 34) versehen ist.

10. Vorrichtung nach den Ansprüchen 7 bis 9,
**dadurch gekennzeichnet,**
dass der mittlere Bereich (30) oberhalb des Haltebereichs (1; 1') eine durchgehende, quer zur Längsrichtung des Lagerbereichs verlaufende Ausnehmung (36) aufweist.

11. Vorrichtung nach Anspruch 10,
**dadurch gekennzeichnet,**
dass die Ausnehmung (36) mit einem Verriegelungselement (37) versehen ist.

12. Vorrichtung nach einem oder mehreren der vorhergehenden Ansprüche,
**dadurch gekennzeichnet,**
dass oberseitig der Wickelzonen (10; 10') und/oder des mittleren Bereichs (30) mindestens eine Rastnocke (40) vorgesehen ist.

13. Vorrichtung nach Anspruch 12,
**gekennzeichnet durch**
mehrere Rastnocken (40).

14. Vorrichtung nach Anspruch 13,
**dadurch gekennzeichnet,**
dass die Rastnocken (40) im gleichen Abstand voneinander auf der Oberseite der Wickelzonen (10; 10') und/oder des mittleren Bereichs (30) angeordnet sind.

15. Vorrichtung nach Anspruch 14,
**dadurch gekennzeichnet,**
dass die Rastnocken (40) auf der Oberseite mittig angeordnet sind.

16. Vorrichtung nach einem oder mehreren der vorhergehenden Ansprüche,
**dadurch gekennzeichnet,**
dass zwischen dem Haltebereich (1) und dem mittleren Bereich (30) eine umlaufende Dichtlippe (22; 22') angeordnet ist.

17. Vorrichtung nach Anspruch 16,
**dadurch gekennzeichnet,**
dass die umlaufende Dichtlippe (22') stirnseitig mit einem aus weicherem Material bestehenden Dichtring (23) versehen ist.

18. Vorrichtung nach Anspruch 17,
**dadurch gekennzeichnet,**
dass der Dichtring (23) im Querschnitt mehreckig oder rund ausgebildet ist.

19. Vorrichtung nach Anspruch 16 oder 17,
**dadurch gekennzeichnet,**
dass der Dichtring (23) im Zweikomponenten-Spritzverfahren oder mechanisch mit der umlaufenden Dichtlippe (22') verbunden ist.

20. Vorrichtung nach einem oder mehreren der vorhergehenden Ansprüche,
**dadurch gekennzeichnet,**
dass der Haltebereich (1) als Klipp (5), als Profil- oder als Gewindebolzen, als Teil eines Bajonett-Verschlusses oder als Schiebelager ausgebildet ist.

21. Vorrichtung nach Anspruch 20,
**dadurch gekennzeichnet**
dass der als Haltebereich ausgebildete Klipp (5) im Querschnitt rund, oval oder rechteckig ausgebildet ist.

22. Vorrichtung nach Anspruch 21,
**dadurch gekennzeichnet,**
dass der Klipp (5) über den Umfang verteilt mindestens zwei federnde, gegen die Dichtlippe (22; 22') gerichtete Rastarme (18, 19; 18'; 19') aufweist.

23. Vorrichtung nach Anspruch 22,
**dadurch gekennzeichnet,**
dass die Rastarme (18; 19; 18', 19') stirnseitig mit einer oder mehreren Abstufungen (21; 21') versehen sind.

## Claims

1. Apparatus for securing pipes, cables or tubular objects, having a retaining region (1; 1') which can be connected to a carrier, and having a bearing region (2) which is arranged above the retaining region (1; 1'), projects beyond the latter on both sides and on which at least one pipe can be fastened via at least one band-like fastening element (41; 41'), characterized in that, on its end side (S) in each case, the bearing region (2) has a winding zone (10, 10') which comprises at least two resilient arms (7, 8, 9; 7', 8', 9') extending in the longitudinal direction of the bearing region (2).

2. Apparatus according to Claim 1, characterized in that the winding zone (10; 10') comprises in each case three resilient arms (7, 8, 9; 7', 8', 9') which are separated from one another by two slits (11, 12; 11', 12').

3. Apparatus according to Claim 2, characterized in that the two outer arms (7, 9; 7', 9') are designed to taper conically (15, 16; 15', 16') on the outside in relation to the retaining region (1; 1').

4. Apparatus according to one or more of the preceding claims, characterized in that the resilient arms (7, 8, 9; 7', 8', 9') are provided, on the underside, with at least one latching nose (20; 20').

5. Apparatus according to Claim 4, characterized by a plurality of spaced-apart latching noses (20; 20').

6. Apparatus according to Claim 4 or 5, characterized in that the latching noses (20; 20') are of sawtooth form.

7. Apparatus according to one or more of the preceding claims, characterized in that the winding zone (10; 10') merges into an enlarged, central region (30) in each case which is connected to the retaining region (1; 1').

8. Apparatus according to Claim 7, characterized in that the central region (30) is connected in a conically tapering manner to the two winding zones (10; 10').

9. Apparatus according to Claims 7 and 8, characterized in that the conically tapering part (31, 32) of the central region (30) is provided with lateral cutouts (33, 35).

10. Apparatus according to Claims 7 to 9, characterized in that the central region (30) has, above the retaining region (1; 1'), a through-passage (36) which runs transversely to the longitudinal direction of the bearing region.

11. Apparatus according to Claim 10, characterized in that the through-passage (36) is provided with a locking element (37).

12. Apparatus according to one or more of the preceding claims, characterized in that at least one latching protrusion (40) is provided on the top side of the winding zones (10; 10') and/or of the central region (30).

13. Apparatus according to Claim 12, characterized by a plurality of latching protrusions (40).

14. Apparatus according to Claim 13, characterized in that the latching protrusions (40) are spaced apart at regular intervals from one another on the top side of the winding zones (10; 10') and/or of the central region (30).

15. Apparatus according to Claim 14, characterized in that the latching protrusions (40) are arranged centrally on the top side.

16. Apparatus according to one or more of the preceding claims, characterized in that an encircling sealing lip (22; 22') is arranged between the retaining region (1) and the central region (30).

17. Apparatus according to Claim 16, characterized in that the encircling sealing lip (22') is provided on the end side with a sealing ring (23) consisting of softer material.

18. Apparatus according to Claim 17, characterized in that the sealing ring (23) is designed to be polygonal or round in cross section.

19. Apparatus according to Claim 16 or 17, characterized in that the sealing ring (23) is connected to the encircling sealing lip (22') by two-component injection moulding or mechanically.

20. Apparatus according to one or more of the preceding claims, characterized in that the retaining region (1) is designed as a clip (5), as a profiled or threaded bolt, as a part of a bayonet closure or as a sliding bearing.

21. Apparatus according to Claim 20, characterized in that the clip (5), designed as retaining region, is designed to be round, oval or rectangular in cross section.

22. Apparatus according to Claim 21, characterized in that, distributed over the circumference, the clip (5) has at least two resilient latching arms (18, 19; 18'; 19') directed towards the sealing lip (22; 22').

23. Apparatus according to Claim 22, characterized in that the latching arms (18; 19; 18', 19') are provided, on the end sides, with one or more stepped formations (21; 21').

## Revendications

1. Dispositif pour la fixation de tubes, de câbles ou d'objets de forme tubulaire comportant une partie de retenue (1; 1') devant être raccordée à un support, et une partie de support (2) disposée au-dessus de la partie de retenue et fait saillie des deux côtés au-delà de la partie de retenue (1; 1') et à laquelle au moins un tube doit être fixé à l'aide d'au moins un élément de fixation en forme de bande (41; 41'), caractérisé en ce
que la partie de support (2) possède respectivement sur sa face frontale (S), une zone de bobinage (10, 10'), qui est constituée par au moins deux bras élastiques (7, 8, 9, 7', 8', 9') qui s'étendent dans la direction longitudinale de la partie de support (2).

2. Dispositif selon la revendication 1, caractérisé en ce
que la zone de bobinage (10; 10') est constituée respectivement de trois bras élastiques (7, 8, 9; 7', 8', 9'), qui sont séparés les uns des autres par deux fentes (11, 12; 11', 12').

3. Dispositif selon la revendication 2, caractérisé en ce
que les deux bras extérieurs (7, 9; 7', 9') sont agencés extérieurement de manière à converger selon une forme conique (15, 16; 15', 16') en direction de la partie de retenue (1; 1').

4. Dispositif selon une ou plusieurs des revendications précédentes, caractérisé en ce
que les bras élastiques (7, 8, 9; 7', 8', 9') sont pourvus, au niveau de leur face inférieure, d'au moins un bec d'encliquetage (20; 20').

5. Dispositif selon la revendication 4, caractérisé en ce par
plusieurs becs d'encliquetage (20; 20') situés à distance les uns des autres.

6. Dispositif selon la revendication 4 ou 5, caractérisé en ce
que les becs d'encliquetage (20; 20') possèdent une forme en dents de scie.

7. Dispositif selon une ou plusieurs des revendications précédentes, caractérisé en ce
que la zone de bobinage (10; 10') se prolonge respectivement par une partie médiane agrandie (30), qui est reliée à la partie de retenue (1; 1').

8. Dispositif selon la revendication 7, caractérisé en ce
que la partie médiane (30) est reliée, en convergeant avec une forme conique, aux deux zones de bobinage (10; 10').

9. Dispositif selon les revendications 7 et 8, caractérisé en ce
que la partie (31, 32), qui converge avec une forme conique, est pourvue d'évidements latéraux (33, 34).

10. Dispositif selon les revendications 7 à 9, caractérisé en ce
que la partie médiane (30) possède, au-dessus de la partie de retenue (1; 1'), un évidement continu (36), qui s'étend transversalement par rapport à la direction longitudinale de la partie de support.

11. Dispositif selon la revendication 10, caractérisé en ce
que l'évidement (36) est pourvu d'un élément de verrouillage (37).

12. Dispositif selon une ou plusieurs des revendications précédentes, caractérisé en ce
qu'au moins un téton d'encliquetage (40) est prévu sur la face supérieure des zones de bobinage (10; 10') et/ou de la partie médiane (3).

13. Dispositif selon la revendication 13, caractérisé par
plusieurs tétons d'encliquetage (40).

14. Dispositif selon la revendication 13, caractérisé en ce
que les tétons d'encliquetage (40) sont situés à une même distance les uns des autres sur la face supérieure des zones de bobinage (10; 10') et/ou de la partie médiane (30).

15. Dispositif selon la revendication 14, caractérisé en ce
que les tétons d'encliquetage (40) sont disposés au centre de la face supérieure.

16. Dispositif selon une ou plusieurs des revendications précédentes, caractérisé en ce
qu'une lèvre périphérique d'étanchéité (22; 22') est disposée entre la partie de retenue (1) et la partie médiane (30).

17. Dispositif selon la revendication 16, caractérisé en ce
que la lèvre périphérique d'étanchéité (22') est pourvue frontalement d'une bague d'étanchéité (23) réalisée en un matériau plus mou.

18. Dispositif selon la revendication 17, caractérisé en ce
que la bague d'étanchéité (23) possède une section transversale de forme polygonale ou circulaire.

19. Dispositif selon la revendication 16 ou 17, caractérisé en ce
que la bague d'étanchéité (23) est reliée selon le procédé de moulage par injection à deux constituants ou bien mécaniquement à la lèvre périphérique d'étanchéité (22').

20. Dispositif selon une ou plusieurs des revendications précédentes, caractérisé en ce
que la partie de retenue (1) est agencée sous la forme d'une pince (5), sous la forme d'un goujon profilée ou d'un boulon fileté, en tant que partie d'un dispositif de fermeture à baïonnette ou en tant que support coulissant.

21. Dispositif selon la revendication 20, caractérisé en ce
que la pince (5) agencée en tant que partie de retenue possède une section transversale circulaire, ovale ou rectangulaire.

22. Dispositif selon la revendication 21, caractérisé en ce
que la pince (5) comporte au moins deux bras élastiques d'encliquetage (18, 19; 18', 19'), qui sont répartis sur la périphérie et sont dirigés vers la lèvre d'étanchéité (22; 22').

23. Dispositif selon la revendication 22, caractérisé en ce que
que les bras d'encliquetage (18, 19; 18', 19') sont pourvus frontalement d' une ou de plusieurs parties étagées (21, 21').
